# EUROPEAN PATENT SPECIFICATION

(11) **EP 1 303 580 B1**
(45) Date of publication and mention of the grant of the patent: **24.05.2006**
(21) Application number: 01949863.3
(22) Date of filing: 19.07.2001
(51) Int. Cl.: C11B 3/10

(54) **METHOD FOR PRODUCING MARINE OILS WITH REDUCED LEVELS OF CONTAMINANTS**
VERFAHREN ZUR HERSTELLUNG VON ÖLEN MARINEN URSPRUNGS MIT REDUZIERTER KONTAMINATION
METHODE DE PREPARATION D'HUILES MARINES PRESENTANT DE FAIBLES TAUX DE CONTAMINANTS

(30) Priority: 19.07.2000 IS 556500
(43) Date of publication of application: 23.04.2003
(73) Proprietor: LYSI HF, IS-121 Reykjavik (IS)
(72) Inventor: HJALTASON, Baldur, IS-108 Reykjavik (IS)
(74) Representative: Fridriksson, Einar Karl
(86) International application number: PCT/IS2001/000014
(87) International publication number: WO 2002/006430

(56) References cited:
- EP-A2- 0 340 635
- WO-A1-99/64547
- DATABASE FSTA [Online] KANEMATSU H. ET AL.: 'Behaviour of trace components in oils and fats during processing for edible use. I. Removal of organo-chlorinepesticides and polychlorinated biphenyls (PCB) from oils and fats', XP002948160 Retrieved from STN Database accession no. 76(08):N0332 & JOURNAL OF JAPAN OIL CHEMISTS' SOCIETY (YUKAGAKU) vol. 25, no. 1, 1976, pages 38 - 41

## Description

### FIELD OF INVENTION

The present invention relates to marine oil production and products obtained thereby for human and animal consumption.

### TECHNICAL BACKGROUND AND PRIOR ART

Fish oils are used both for human and animal consumption as a source of oils and fats. Such oils are used in margarine and cooking oils after a refinement procedure involving hydrogenation for saturating the fatty acid chains, and removal of free fatty acids, oxidation products, volatile substances etc. However, marine oils are also sought after as an important source of poly-unsaturated fatty acids (PUFAs) such as the omega-3 fatty acids DHA (docosahexaenoic acid) and EPA (eicosapentaenoic acid) known to reduce the risk of cardiovascular disease. Marine oil is also an essential ingredient in feed for several fish species raised in aquaculture such as salmon, and is commonly included as a supplement in feed for many domestic animal species, e.g., horses, dogs, cats, swines and poultry. For such uses, crude, unrefined marine oil is typically used, as the use of refined oil is, at least in agriculture, not economically feasible.

Organochlorine contaminants may be found in marine oils because of the levels in fish. Many such compounds are ubiquitous contaminants in the global environment because of their persistence and semi-volatile nature. These compounds have primarily been introduced into the environment at the sites of production and application, but they become globally distributed through the atmosphere and water systems, though the effective distribution will depend on the volatility of different compounds. As they are fat-soluble compounds they accumulate in fatty tissue and organs through the marine food chain.

A typical refinement process of fish oils includes steps of neutralization, bleaching, and deodorization. Neutralization implies an extraction of the oils by alkaline water at elevated temperature for removal of free fatty acids. Bleaching implies an adsorption by so called bleaching earth which removes pigments, oxidation products and other polar high molecular weight species from the oil. Deodorization implies a steam distillation at high temperature and vacuum such that residual pigments (carotenoids) and so-called primary oxidation products are thermally decomposed and volatile compounds are removed by evaporation. A further step of hydrogenation may be included to produce saturated oils and fats.

The deodorization step in particular reduces the amount of more volatile compounds such as hexachlorcyclohexanes (α-HCH, β-HCH, and γ-HCH (lindane), and hexachlorobenzene (HCB), but much less efficiently so for dioxins, whereas extreme conditions (300°C at 10 hours as compared to more standard conditions of 180°C and 2 h.) reduces the concentration of dioxins appreciably (Hilbert, et al. *Chemosphere* 37, 1241-1252, 1998). Such processes though, are costly and reduce the dietary value and keeping quality of the oils, e.g., by the removal of natural anti-oxidants and decomposition (oxidation and hydrolysation) of the poly-unsaturated fatty acids, and polymerization of fatty acids.

Methods have been developed specifically for the removal of organochlorine compounds. EP 340 635 describes the reduction of PCB content in deodorized oil by means of silica gel or silicic acid. Similarly, Addison et al. describe the removal of organochlorine pesticides and biphenyls from pre-treated (alkali-refined and neutralized) marine oils by means of clay (Addison, R. F., et al. J. *Am. Oil* Chem. *Soc.* 51, 192-194, 1974). Krukonis describes the extraction of polychlorinated biphenyls from fish oils with the use of supercritical fluid processing (Krukonis, V. J. J. *Am. Oil Chem.* Soc. 66, 818-821, 1989). WO 99/64547 describes a method for reducing the content of polychlorinated dioxins, furans, biphenyls, and polycyclic aromatic hydrocarbons in oil of marine origin. The method is characterized by the following steps, where the oil is:
a) refined with acid and/or alkali;
b) cold cleared,
c) stirred under reduced pressure in the temperature range of 40 to 100°C with activated carbon,
d) cooled to 20-40°C,
e) separated off the activated carbon,
f) deodorized with hot steam under reduced pressure for a period of 0,5 hours to 20 hours,
g) and cooled to 20 to 70°C.

This method however involves a costly, multi-step process and is not feasible for providing animal feed-grade marine oils. Repeated heating of the marine oil may adversely affect the quality of the oil, as heating as well as contact with water, alkali or acid solutions and air increases oxidation, hydrolyzation, and polymerization of fatty acids, particularly degradation of the sensitive poly- and highly unsaturated fatty acids. These processing steps will additionally reduce the content of certain beneficial ingredients such as natural anti-oxidants.

Kanematsu et al (J. of Japan Oil Chemists Society (1976) 25 (1) 38-41) disclose a process for treating crude oil by a neutralization process and a bleaching process.

There is still a need for a simple and cost-efficient method for effective removal of organochlorine compounds from fish oils that provides minimally processed contaminant-reduced marine oil that may be substituted for crude oil, e.g. in animal feed, and that does not adversely affect the quality of the oil.

The inventor has now surprisingly found that a simplified method effectively reduces the amount of organochlorine contaminants including polychlorinated dioxins, furans, biphenyls, and polycyclic aromatic hydrocarbons in marine oils, and that the method can be used to purify unrefined marine oil, thereby providing very economical, contaminant-reduced material. The method is optimized to minimize all handling and processing of the oil, thereby reducing the risk of degradation by oxidation, hydrolyzation, and polymerization of fatty acids, and the removal and degradation of natural anti-oxidants.

### SUMMARY OF THE INVENTION

The invention provides a method which is considerably simpler than prior art methods for reducing the amount of organochlorine contaminants in marine oils. The method is useful for providing contaminant-reduced "crude oil" (i.e. oil that is not alkali-refined, neutralized and deodorized) for which there is a need in particular in animal feed production, following stricter standards and limits for allowed amounts of contaminants in animal feed and animal products.

In a first aspect, the present invention provides a method for reducing the amount of organochlorine contaminants in marine oils comprising the steps of: a) contacting the oil under reduced pressure in a temperature range of 30 - 95 °C with activated carbon, and b) separating the activated carbon from the oil, wherein the method does not include prior steps of neutralization and winterization.

In a further aspect, marine oils treated by the above method are provided.

In yet a further aspect, the use of the above-mentioned marine oils for animal feed is provided.

In a still further aspect, the use of such marine oils is provided for food products, pharmaceuticals or dietary supplements.

### DETAILED DESCRIPTION

Dioxin is the generic term given to polychlorinated dibenzo-p-dioxins (PCDD) and dibenzofurans (PCDF). Dioxins are unwanted by-products in the manufacture of certain chemicals. Small amounts are also produced during most combustion and incineration processes.

Dioxins have for some time been calculated in terms of a toxic equivalency (TEQ) related to the reportedly most toxic congener (2,3,7,8-TCDD; tetrachlorodibenzo-p-dioxin). The TEQ values are calculated by multiplying the amount of the different toxic-isomers with normalizing factors and adding those values. There are at last three, slightly different sets of normalizing factors used to calculate TEQ values, as outlined in Table 1, which lists most of the common isomers.

A tolerable daily intake (TDI) for humans of 10 pg 2,3,7,8-TCDD equivalents/kg body weight was recommended by an expert group convened by the World Health Organization in 1990 (EUR/ICP/PCS 030(S) 0369n, publ. WHO Regional Office for Europe, Copenhagen).

**Table1**

| | TEQ-factors, Nordic Model | TEQ-factors, International Model | TEQ-factors, WHO Model |
|---|---|---|---|
| 2378-TCDF | 0,1 | 0,1 | 0,1 |
| 2378-TCDD | 1 | 1 | 1 |
| | | | |
| 12348/12378-PeCDF | 0,01 | 0,05 | 0,05 |
| 23478-PeCDF | 0,5 | 0,5 | 0,5 |
| 12378-PeCDD | 0,5 | 0,5 | 1 |
| | | | |
| 123478/123479-H×CDF | 0,1 | 0,1 | 0,1 |
| 123678-HxCDF | 0,1 | 0,1 | 0,1 |
| 123789-HxCDF | 0,1 | 0,1 | 0,1 |
| 234678-HxCDF | 0,1 | 0,1 | 0,1 |
| 123478-HxCDD | 0,1 | 0,1 | 0,1 |
| 123678-HxCDD | 0,1 | 0,1 | 0,1 |
| 123789-HxCDD | 0,1 | 0,1 | 0,1 |
| | | | |
| 1234678-HpCDF | 0,01 | 0,01 | 0,01 |
| 1234789-HpCDF | 0,01 | 0,01 | 0,01 |
| 1234678-HpCDD | 0,01 | 0,01 | 0,01 |
| | | | |
| OCDF | 0,001 | 0,001 | 0,001 |
| OCDD | 0,001 | 0,001 | 0,001 |

| | | | |
|---|---|---|---|
| T: tetra-, Pe: penta-, Hx: hexa, Hp: hepta, O: octa- | | | |

Of the 209 PCB (polychlorinated biphenyls) congeners, a dozen are now considered to be "dioxin-like" because of their toxicity and certain structural features that make them similar to 2,3,7,8-TCDD. WHO has accordingly assigned TEQ factors to these congeners, indicating the toxicity relative to 2,3,7,8-TCDD (Table 2).

**Table 2**

| PCB Congener | TEQ factor |
|---|---|
| 3,3',4,4'-tetrachlorobiphenyl (PCB-77) | 0,0001 |
| 3,3',4,4'-tetrachlorobiphenyl (PCB-81) | 0,0001 |
| 3,3',4,4',5-pentachlorobiphenyl (PCB-126) | 0,1 |
| 3,3',4,4',5,5'-tetrachlorobiphenyl (PCB-169) | 0,01 |
| 2,3,3',4,4'-pentachlorobiphenyl (PCB-105) | 0,0001 |
| 2,3,4,4',5-pentachlorobiphenyl (PCB-114) | 0,0005 |
| 2,3',4,4',5-pentachlorobiphenyl (PCB-118) | 0,0001 |
| 2',3,4,4',5-pentachlorobiphenyl (PCB-123) | 0,0001 |
| 2,3,3',4,4',5-hexachlorobiphenyl (PCB-156) | 0,0005 |
| 2,3,3',4,4',5'-hexachlorobiphenyl (PCB-157) | 0,0005 |
| 2,3',4,4',5,5'-hexachlorobiphenyl (PCB-167) | 0,00001 |
| 2,2',3,4,4',5,5'-heptachlorobiphenyl (PCB-180) | ― |
| 2,3,3',4,4',5,5'-heptachlorobiphenyl (PCB-189) | 0,0001 |

As mentioned, the invention provides in a first aspect a method for reducing the amount of organochlorine contaminants in marine oils comprising the steps of:
a) contacting the oil under reduced pressure with activated carbon, in a temperature range of about 30 to 95°C, preferably such as about 30 to 55°C, more preferably such as about 35 to 45°C, and
b) separating the activated carbon from the oil,
wherein the method does not include prior steps of neutralization and winterization.

The organochlorine contaminants which are reduced include polychlorinated dioxins, furans, biphenyls, and polycyclic aromatic hydrocarbons (PAH). As the accompanying examples demonstrate, the method of the invention has been tested in particular with respect to reduction of dioxin levels, but PCB analyses have also been conducted and show positive results. Other organochlorine contaminants and PAH substances are expected to show similar results, as these compounds have similar chemical characteristics, e.g. with respect to adsorption to activated carbon and other adsorbents.

Marine oils in this context refer generally to oils derived from marine organisms including mammals, fish, and algal oil. The invention is expected to find most use in the processing of fish oils.

In a useful embodiment of the invention, the oil is contacted with activated carbon in a temperature range of about 30 to 40°C, including about 35 to 40°C.

Whereas several types of adsorbents may be used and have been tested by the inventor, activated carbon was found to be most effective. Most commercial types of powdered or granular activated carbon may be used. In a preferred embodiment, powdered activated carbon is used with a high surface-to-weight ratio and a beneficial size distribution that allows removal of the activated carbon by conventional filtering. An example of such preferable activated carbon is CARBOPAL™ MB 4. For the step of removing the activated carbon, conventional filtering means may be used such as a filter press with conventional filtering aid. When the oil is in contact with the activated carbon the oil is preferably agitated, such as by stirring.

Neutralization refers to an extraction of the oils by alkaline water at elevated temperature for removal of free fatty acids and is followed by washing with water and vacuum drying. Winterization is also known is cold clearing and refers to gradual cooling of the oil in order to form fat crystals that are subsequently filtered off. The aim of winterization is to keep the oil liquid at lower temperatures.

Quite surprisingly, the inventor found that prior refinement steps of neutralization and winterization do not need to be included in the method according to the invention, contrary to what is taught by the prior art, e.g. in WO 99/64547. It might have been expected that the additional water content and residual solid material from the biological raw material in crude marine oil would render the adsorption of organochlorine contaminants ineffective. However, as the accompanying examples demonstrate (see, e.g. Table 1.1 last col. and Table 2.1), effective removal of said contaminants is achieved from crude oil by the method. The results are comparable for untreated crude oil and oil that has been subjected to a pre-treatment step of drying. Additionally, WO 99/64547 includes a step of deodorization, which is not found to be necessary for the method of the current invention. Such contaminant-reduced "crude" fish oil is now being produced and sold by the applicant for use mainly as animal feed.

The amount of activated carbon is determined such as to achieve effective reduction of relevant organochlorine contaminants such as those mentioned above, while minimizing the loss of material due to residual oil lost in the step of removing the activated carbon. Typical amounts of dioxins in unrefined marine oils from relatively unpolluted oceans such as the North Atlantic are in a range of approximately 1 to 20 pg TEQ/g (see, e.g., *Fish Meal and Fish Oil Dioxin Levels,* Int. Fishmeal & Oil Manufacturers Assoc. (IFOMA), Sept. 1999). Effective reduction of dioxins in this context means a reduction to a concentration below about 2 pg TEQ/g, preferably below about 1 pg TEQ/g, and more preferably below about 0,5 pg TEQ/g.

In one embodiment of the invention, the amount of activated carbon used is 0,1 to 1,5 wt%, such as 0,2 to 0,75 wt%, including 0,25 to 0,5 wt%. The lower range of the amount of activated carbon, such as 0,1 to 0,5 wt%, including 0,2 to 0,35 wt%, is preferred for treatment of oil with low pre-treatment levels of dioxin, such as up to 10 pg TEQ/g.

In a particular embodiment, marine oils with a higher pre-treatment level of dioxin, such as 10 to 30 pg TEQ/g are treated using 0,3 to 0,75 wt% of activated carbon, including 0,4 to 0,5 wt% and 0,5 to 0,6 wt% of activated carbon.

It is contemplated that for marine oils with yet higher pre-treatment levels of dioxin, such as, e.g., 30 to 100 pg TEQ/g, a relatively high amount of activated carbon is preferable, such as 0,5 to 1,5 wt%, including 0,5 to 0,75 wt%, to obtain optimal reduction in dioxin levels.

The treatment in step a) of the method is preferably done in a batch vessel such as a commercial batch-bleaching unit. Other embodiments include the use of continuous feeding units such as continuous oil bleaching units. The treatment is done under vacuum, such as a vacuum of 1 to 70 mbar, preferably 2 to 35 mbar, such as 5 to 25 mbar. The time of treatment according to the method of the invention is optimized such as to obtain the desirable reduction in contaminant levels while not sustaining the oil to prolonged treatment. In one embodiment, the time of treatment is about 15 to 150 minutes, but preferably about 15 to 45 such as about 20 to 30 minutes, and including about 15, 20, 25, 30, 35 or 40 minutes.

PCB compounds are generally found in higher absolute levels in fish oil than dioxins, which amount to similar or slightly higher TEQ levels of PCBs than dioxins (due to lower PCB TEQ factors), such as in the range of 20-60 pg TEQ/g. Consequently, the inventor has found that it may be beneficial for improving the results in reduction of PCB levels to repeat the cleaning process, by adding a second, fresh batch of activated carbon and heat the oil for a second period of time. Preferably, the first amount of activated carbon is separated from the oil prior to adding the second batch of activated carbon, or, alternatively, all the activated carbon is separated from the oil after the second treatment.

In one embodiment, the method of the invention further comprises pretreatment steps of heating the oil under reduced pressure in the presence of about 0.5 to about 2.5 wt% silica adsorbent such as about 0.5 to 1.5 wt%, including about 1.0 wt% and about 1.5 wt%, and separating the silica adsorbent from the oil. The pretreatment step helps to reduce other extraneous substances which may otherwise render the activated carbon adsorption of organochlorine contaminants less effective, but the silica by itself reduces the PCB and dioxin levels negligibly.

As mentioned, it is a desirable feature of the invention that crude marine oils can be treated according to the invention to obtain a minimally treated, contaminant-reduced marine oil. The oil treated according to the invention may however be further processed to a varying degree depending on its intended use, with methods of refinement known in the art, such as those described earlier. As demonstrated in Example 4 herein, the method of the invention does not affect the stability of marine oil. Cod liver oil that was treated according to the invention was subsequently refined and winterized, and measured at intervals for a period of three years, with negligible deterioration in quality.

Any marine oils can be treated according to the method of the invention. In one embodiment, the marine oil is a fish liver oil such as cod liver oil, halibut liver oil, or shark liver oil.

In another embodiment marine oils treated according to the invention include blue whiting oil, capelin oil, herring oil, mackerel oil, anchovy oil, menhaden oil, sardine oil, tuna oil (both tuna body oil and tuna orbital oil), horse mackerel oil, jack mackerel oil, pacific mackerel oil, sandeel oil, Norwegian pout oil and sprat oil.

In a further aspect, the present invention provides contaminant-reduced marine oils obtained by the method of the invention. The oils thus provided include marine oils such as all the above-mentioned.

In another aspect of the invention, the use of marine oil treated by the method of the invention is provided for animal feed. Marine oils according to the invention are quite suitable for such use, as the method provides economical contaminant-reduced material, yet without a reduction in the amount of the desirable highly-unsaturated fatty acids, or any other impact on the quality of the unrefined oil. Such use according to the invention is suitable for feeding domestic animals including horses, dogs, cats, poultry, swine, and farmed fur animals such as mink and fox. Also, the invention provides use of oil such as to affect the lipid composition of food products from animals being fed said feed, to raise the levels of poly-unsaturated fatty acids in meat, eggs, or dairy products.

In a particularly useful embodiment of the invention, the use of marine oils is provided for aquaculture. Marine oils treated by the method of the invention are suitable as a component in feedstuff for aquacultured species. Aquacultured species for consumption include fish species such as eel, salmon, trout, carp, bass, bream, turbot, sea bass, sole, milkfish, gray mullet, grouper, sea bream, halibut, flounder, Japanese flounder, and monkfish; crustaceans such as shrimp, lobster, crayfish and crabs; and molluscs such as bivalves. It is essential for effective cultivation of many of the above-mentioned consumption species that their dietary requirements are met, in particular with respect to the lipid composition of their diet.

In yet a further aspect of the invention, the use of a marine oil treated by the method of the invention is provided for food products, pharmaceuticals or dietary supplements. Such products comprise bottled marine oil for human consumption, marine oil capsules, PUFA-enriched food products such as breads, dairy products, and other manufactured food products. In an embodiment of the invention, the oil for the aforementioned use is dried prior to or after the contaminant-reducing treatment, and subsequently further processed to reach the desired level of refinement. Such further processing preferably comprises neutralization, bleaching, and deodorization, and optionally a step of winterization.

### EXAMPLES

### Example 1: Dioxin reduction in crude herring oil

The following example demonstrates the reduction in dioxin levels achievable with the method as disclosed. Samples referred to as "dried crude oil" were pre-treated with a drying step comprising heating the oil under vacuum, at about 70 to 80°C and about 20 to 30 mbar to evaporate water mixed with the oil. This was to investigate whether the additional water content of crude (not dried) oil would decrease the efficiency of the dioxin reduction. Different treatment temperatures were compared and the amount of activated carbon was varied. Activated carbon was added to the oil in a bleaching vessel and the oil was kept at the stated temperature for 30 min. The oil was subsequently filtered with a conventional filter press and filtering aid.

**Table 1.1**

| Contaminant | Crude herring oil | Dried crude oil 40°C treatm; 0,33 wt% act. carbon, pg/g | Dried crude oil, 60°C treatm; 0,33 wt% act. carbon, pg/g |
|---|---|---|---|
| 2378-TCDD | 0,18 | <0,10 | 0,20 |
| 12378-PeCDD | 0,34 | 0,31 | < 0,10 |
| 123478-HxCDD | 0,34 | 0,18 | 0,13 |
| 123678-HxCDD | 0,35 | 0,17 | 0,27 |
| 123789-HxCDD | 0,13 | 0,08 | 0,26 |
| 1234678-HpCDD | 0,80 | <0,20 | < 0,40 |
| OCDD | 4,78 | 1,81 | 1,81 |
| sum PCDD | 7,15 | 2,55 | 2,67 |
| sum PCDD, TEQ (int.) | 0,44 | 0,30 | 0,32 |
| sum PCDD, TEQ (WHO) | 0,61 | 0,46 | 0,37 |
| 2378-TCDF | 6,23 | 0,47 | 0,29 |
| 12378/12348-PeCDF | 1,04 | <0,10 | <0,10 |
| 23478-PeCDF | 2,00 | 0,27 | 0,20 |
| 123478/123479-HxCDF | 0,44 | 0,14 | 0,17 |
| 123678-HxCDF | 0,33 | < 0,20 | 0,13 |
| 123789-HxCDF | < 0,20 | 0,20 | 0,15 |
| 234678-HxCDF | 0,34 | 0,23 | 0,32 |
| 1234678-HpCDF | 0,51 | 0,38 | 0,26 |
| 1234789-HpCDF | < 0,80 | < 0,80 | < 0,80 |
| OCDF | 1,68 | 1,07 | 0,92 |
| sum PCDF | 14,1 | 2,76 | 2,76 |
| sum PCDF, TEQ (int.) | 1,82 | 0,28 | 0,22 |
| sum PCDF, TEQ (WHO) | 1,82 | 0,28 | 0,22 |
| sum PCDD & PCDF | 21,3 | 5,31 | 5,43 |
| sum TEQ (int.) | 2,27 | 0,58 | 0,54 |
| sum TEQ (WHO) | 2,43 | 0,73 | 0,59 |
| 2378-TCDD | <0,10 | <0,10 | 0,05 |
| 12378-PeCDD | <0.10 | <0.10 | 0,09 |
| 123478-HxCDD | <0.20 | <0,20 | < 0,20 |
| 123678-HxCDD | <0,20 | <0,20 | < 0,20 |
| 123789-HxCDD | <0,20 | <0,20 | < 0,20 |
| 1234678-HpCDD | 0,14 | <0,40 | 0,17 |
| OCDD | 1,03 | 0,69 | 1,14 |
| sum PCDD | 1,17 | 0,69 | 1,45 |
| sum PCDD, TEQ (int.) | 0,21 | 0,21 | 0,16 |
| sum PCDD, TEQ (WHO) | 0,26 | 0,26 | 0,20 |
| 2378-TCDF | 0,20 | 0,31 | 0,03 |
| 12378/12348-PeCDF | <0,10 | <0,10 | <0,10 |
| 23478-PeCDF | 0,18 | 0,08 | 0,14 |
| 123478/123479-HxCDF | <0,20 | <0,20 | 0,15 |
| 123678-HxCDF | <0,20 | 0,16 | 0,06 |
| 123789-HxCDF | <0,20 | <0,20 | 0,07 |
| 234678-HxCDF | 0,25 | 0,20 | 0,28 |
| 1234678-HpCDF | 0,24 | 0,37 | 0,08 |
| 1234789-HpCDF | <0,80 | < 0,80 | < 0,80 |
| OCDF | <1,00 | 0,43 | 0,52 |
| sum PCDF | 1,87 | 1,55 | 2,22 |
| sum PCDF, TEQ (int.) | 0,21 | 0,16 | 0,17 |
| sum PCDF, TEQ (WHO) | 0,21 | 0,16 | 0,17 |
| sum PCDD & PCDF | 3,04 | 2,24 | 3,67 |
| sum TEQ (int.) | 0,42 | 0,37 | 0,33 |
| sum TEQ (WHO) | 0,47 | 0,43 | 0,37 |

The example demonstrates that the method effectively reduces the dioxin amount in crude oil to levels well below 1 pg TEQ/g. The reduction is comparable in the crude oil samples and dried crude oil samples, demonstrating that the efficiency is not adversely affected by the higher water-content in the crude oil.

### Example 2: Dioxin reduction from crude brisling oil

These results show that the method according to the invention is applicable to marine oils with a relatively high concentration of dioxin. The material used is crude brisling oil without any pre-treatment.

**Table 2.1**

| Contaminant | Crude brisling oil pg/g | Crude oil 60°C treatm.; 0,35 wt% act. carbon, pg/g | Crude oil, 60°C treatm.; 0,45 wt% act. carbon, pg/g |
|---|---|---|---|
| 2378-TCDD | 1,77 | 0,14 | 0,12 |
| 12378-PeCDD | 3,58 | 0,38 | 0,17 |
| 123478-HxCDD | 0,82 | 0,25 | 0,06 |
| 123678-HxCDD | 3,08 | 0,29 | 0,17 |
| 123789-HxCDD | 1,10 | 0,27 | 0,10 |
| 1234678-HpCDD | 5,44 | 0,45 | 0,44 |
| OCDD | 4,56 | 2,26 | 2,53 |
| sum PCDD | 17,7 | 4,04 | 3,59 |
| sum PCDD, TEQ (int.) | 4,08 | 0,42 | 0,24 |
| sum PCDD, TEQ (WHO) | 5,87 | 0,61 | 0,33 |
| 2378-TCDF | 30,7 | 1,23 | 1,18 |
| 12378/12348-PeCDF | 7,61 | 0,60 | 0,38 |
| 23478-PeCDF | 27,6 | 0,95 | 0,76 |
| 123478/123479-HxCDF | 3,64 | 0,94 | 0,55 |
| 123678-HxCDF | 2,99 | 0,62 | 0,31 |
| 123789-HxCDF | 0,39 | 0,24 | 0,12 |
| 234678-HxCDF | 3,16 | 0,46 | 0,32 |
| 1234678-HpCDF | 2,78 | 0,73 | 1,18 |
| 1234789-HpCDF | 0,55 | 0,30 | 0,14 |
| OCDF | 2,37 | 1,92 | 0,98 |
| sum PCDF | 100 | 10,00 | 8,04 |
| sum PCDF, TEQ (int.) | 18,3 | 0,87 | 0,66 |
| sum PCDF, TEQ (WHO) | 18,3 | 0,86 | 0,66 |
| sum PCDD & PCDF | 118 | 14,0 | 11,6 |
| sum TEQ (int.) | 22,4 | 1,28 | 0,91 |
| sum TEQ (WHO) | 24,2 | 1,47 | 0,99 |

### Example 3: PCB-levels in organochlorine contaminant reduced Cod liver oil

Sample 1: Alkali refined cod liver oil was heated to 60°C for 30 minutes under reduced pressure with 1.5 wt% silica adsorbent added relative to the oil, whereafter 1 wt% activated carbon was added and the sample heated for 45 min. more. The sample was subsequently filtered through filterpaper.
Sample 2: Alkali refined cod liver oil was heated to 55°C for 45 min. under reduced pressure with 0.5 %wt activated carbon added. The sample was filtered through filterpaper and the treatment repeated.

**Table 3.1**

| PCB-congener ng/g | Alkali refined Cod liver oil | Sample 1 | Sample 2 |
|---|---|---|---|
| PCB 77 | 0,19 | 0,01 | 0,01 |
| PCB 81 | 0,01 | 0,01 | 0,01 |
| PCB 126 | 0,15 | 0,01 | 0,01 |
| PCB 169 | 0,01 | 0,01 | 0,01 |
| PCB 105 | 9,6 | 3,7 | 3 |
| PCB 114 | 0,83 | 0,41 | 0,46 |
| PCB 118 | 29 | 11 | 8,8 |
| PCB 123 | 0,43 | 0,16 | 0,1. |
| PCB 156 | 2,5 | 1,2 | 1,3 |
| PCB 157 | 0,69 | 0,3 | 0,3 |
| PCB 167 | 1,9 | 0,78 | 0,82 |
| PCB 189 | 0,21 | 0,11 | 0,15 |
| **Sum PCB, pg TEQ /g** | **21,073** | **3,56** | **3,35** |

### Example 4: Refined and winterized cod liver oil with reduced dioxin levels

The oil was treated as described in Example 1, and subsequently refined and winterized following standard procedures used for preparing marine oil for human consumption. The refinement included neutralization, drying, bleaching, deodorization, and winterization. Winterization refers to gradual cooling of the oil in order to form fat crystals that are subsequently filtered off. The aim of winterization is to keep the oil liquid at lower temperatures. Samples were kept in glass bottles and fresh bottles were opened for analysis at each time point.

| Contaminant | 40°C treatm; 0,33 wt% act. carbon, pg/g |
|---|---|
| 2378-TCDD | <0.13 |
| 12378-PeCDD | <0,17 |
| 123478-HxCDD | < 0,25 |
| 123678-HxCDD | < 0,20 |
| 123789-HxCDD | < 0,23 |
| 1234678-HpCDD | < 0,26 |
| OCDD | <1,60 |
| 2378-TCDF | 0,66 |
| 12378/12348-PeCDF | <0,15 |
| 23478-PeCDF | <0,15 |
| 123478/123479-HxCDF | <0,14 |
| 123678-HxCDF | 2,3 |
| 123789-HxCDF | <0,17 |
| 234678-HxCDF | <0,15 |
| 1234678-HpCDF | < 0,40 |
| 1234789-HpCDF | < 0,30 |
| OCDF | <1,5 |
| sum TEQ (int.) | 0,51 |

### Example 5: Stability of refined and winterized cod liver oil after treatment for the removal of organochlorine contaminants.

The oil was treated as described in example 4.

**Table 4.1**

| | **storage in months** | | | | | | | |
|---|---|---|---|---|---|---|---|---|
| | **0** | **3** | **6** | **12** | **18** | **24** | **40** | **36** |
| EPA | 9,2 | 9,2 | 9,3 | 9,1 | 9,3 | 9,3 | 9,2 | 9,3 |
| DHA | 13,0 | 12,7 | 12,6 | 12,3 | 12,9 | 12,7 | 12,8 | 12,6 |
| FFA | 0,19 | 0,20 | 0,20 | 0,22 | 0,22 | 0,22 | 0,24 | 0,24 |
| AV | 11,1 | 11,4 | 11,8 | 11,7 | 12,0 | 12,6 | 12,5 | 13,2 |
| PV | 8,1 | 5,7 | 6,9 | 4,6 | 3,4 | 3,4 | 2,7 | 3,0 |

| | | | | | | | | |
|---|---|---|---|---|---|---|---|---|
| **EPA:** expressed as area % of total of 40 peaks on GC. **DHA:** expressed as area % of total of 40 peaks on GC. **FFA:** Free fatty acids, expressed as wt%, measurement analogous to I.A.F.M.M. Fish Oil Bulletin No. 21. **AV:** anisidine value (units of 'AV (g/cm³)⁻¹), measured by UV absorption according to a standardized method (ISO/FDIS 6885:1998). **PV:** Peroxide value, expressed as meq O₂/kg. Method analogous to EP 1997, method 2.5.5, and AOCS method No. Cd 8b-90. | | | | | | | | |

The results show that the quality with respect to the above parameters, of oil treated according to the invention and further refined to suit human consumption, is barely affected over a period of 3 years.

## Claims

1. A method for reducing the amount of organochlorine contaminants in a marine oil comprising the steps of:
a) contacting the oil under reduced pressure in a temperature range of 30 - 95°C with activated carbon,
b) separating the activated carbon from the oil,
wherein the method does not include prior steps of neutralization and winterization.

2. The method according to claim 1, wherein the organochlorine contaminants are selected from the group consisting of polychlorinated dioxins, furans, biphenyls, and polycyclic aromatic hydrocarbons.

3. The method according to claim 1, wherein the temperature range in step a) is 30 - 55°C.

4. The method according to claim 3, wherein the temperature range in step a) is 30 - 40°C.

5. The method according to claim 1, wherein the amount of activated carbon used is in the range of about 0,1 to 1,5 wt%.

6. The method according to claim 1, wherein the amount of activated carbon used is in the range of about 0,2 to 0,75 wt%.

7. The method according to claim 5, wherein the amount of activated carbon used is in the range of about 0,25 to 0,5 wt%.

8. The method according to any of claims 1 to 7, wherein step a) is performed at last twice, with a fresh amount of activated carbon added each time.

9. The method according to claim 1, further comprising pretreatment steps of:
a) heating the oil under reduced pressure in the presence of about 0.5 to about 2.5 wt% silica adsorbent.
b) Separating the silica adsorbent from the oil.

10. The method according to claim 6, wherein the marine oil has a pre-treatment level of dioxin of up to about 10 pg TEQ/g and the amount of activated carbon used is in the range of about 0,2 to 0,5 wt%.

11. The method according to claim 6, wherein the marine oil has a pre-treatment level of dioxin of about 10 to about 30 pg TEQ/g and the amount of activated carbon used is in the range of about 0,3 to 0,75 wt%.

12. The method according to claim 1, wherein the time of step a) is in the range of about 15 to about 150 minutes and the pressure is in the range of about 1 to 70 mbar.

13. The method according to claim 1, wherein the time of step a) is in the range of about 15 to about 45 minutes and the pressure is in the range of about 1 to 70 mbar.

14. The method according to claim 1, wherein the marine oil is a fish liver oil.

15. The method according to claim 14, wherein the marine oil is selected from the group comprising cod liver oil, halibut liver oil, saithe liver oil, shark liver oil, and dog fish liver oil.

16. The method according to claim 15, wherein the marine oil is cod liver oil.

17. The method according to claim 1, wherein the marine oil is a fish body oil.

18. The method according to claim 1, wherein the marine oil is selected from the group comprising blue whiting oil, capelin oil, herring oil, mackerel oil, anchovy oil, menhaden oil, sardine oil, tuna oil, horse mackerel oil, jack mackerel oil, pacific mackerel oil, sandeel oil, Norwegian pout oil and sprat oil.

19. The method according to claim 1 wherein the method does not include steps of neutralization, winterization and deodorization.

## Patentansprüche

1. Verfahren zum Reduzieren der Menge von chlororganischen Kontaminationsstoffen in einem Marineöl, das folgende Schritte umfasst:
a) In-Kontakt-Bringen des Öls unter reduziertem Druck in einem Temperaturbereich von 30 bis 95 °C mit Aktivkohle,
b) Trennen der Aktivkohle von dem Öl,
wobei das Verfahren keine vorhergehenden Schritte des Neutralisierens und Zwischenlagerns umfasst.

2. Verfahren nach Anspruch 1, wobei die chlororganischen Kontaminationsstoffe aus der Gruppe ausgewählt werden, die aus polychlorierten Dioxinen, Furanen, Biphenylen und polyzyklischen aromatischen Kohlenwasserstoffen besteht.

3. Verfahren nach Anspruch 1, wobei der Temperaturbereich in Schritt a) 30 bis 55 °C ist.

4. Verfahren nach Anspruch 3, wobei der Temperaturbereich in Schritt a) 30 bis 40 °C ist.

5. Verfahren nach Anspruch 1, wobei die Menge von benutzter Aktivkohle im Bereich von etwa 0,1 bis 1,5 Gewichtsprozent liegt.

6. Verfahren nach Anspruch 1, wobei die Menge von benutzter Aktivkohle im Bereich von 0,2 bis 0,75 Gewichtsprozent liegt.

7. Verfahren nach Anspruch 5, wobei die Menge von benutzter Aktivkohle im Bereich von 0,25 bis 0,5 Gewichtsprozent liegt.

8. Verfahren nach einem der Ansprüche 1 bis 7, wobei Schritt a) wenigstens zweimal durchgeführt wird, wobei jedes Mal eine frische Menge von Aktivkohle hinzugefügt wird.

9. Verfahren nach Anspruch 1, das außerdem die folgenden Vorbehandlungsschritte umfasst:
a) Erwärmen des Öls unter reduziertem Druck unter Anwesenheit von etwa 0,5 bis etwa 2,5 Gewichtsprozent Silica-Adsorptionsmittel.
b) Trennen des Silica-Adsorptionsmittels von dem Öl.

10. Verfahren nach Anspruch 6, wobei das Marineöl einen Vorbehandlungs-Dioxingehalt von bis zu etwa 10 pg TEQ/g aufweist, und die Menge von benutzter Aktivkohle im Bereich von etwa 0,2 bis 0,5 Gewichtsprozent liegt.

11. Verfahren nach Anspruch 6, wobei das Marineöl einen Vorbehandlungs-Dioxingehalt von etwa 10 bis etwa 30 pg TEQ/g aufweist, und die Menge von benutzter Aktivkohle im Bereich von etwa 0,3 bis 0,75 Gewichtsprozent liegt.

12. Verfahren nach Anspruch 1, wobei die Dauer von Schritt a) im Bereich von etwa 15 bis etwa 150 Minuten liegt und der Druck im Bereich von etwa 1 bis 70 mbar liegt.

13. Verfahren nach Anspruch 1, wobei die Dauer von Schritt a) im Bereich von etwa 15 bis etwa 45 Minuten liegt und der Druck im Bereich von etwa 1 bis 70 mbar liegt.

14. Verfahren nach Anspruch 1, wobei das Marineöl Fischlebertran ist.

15. Verfahren nach Anspruch 14, wobei das Marineöl aus der Gruppe ausgewählt ist, die Kabeljau-Lebertran, Heilbutt-Lebertran, Seelachs-Lebertran, Hai-Lebertran und Katzenhai-Lebertran umfasst.

16. Verfahren nach Anspruch 15, wobei das Marineöl Kabeljau-Lebertran ist.

17. Verfahren nach Anspruch 1, wobei das Marineöl ein Fischkörperöl ist.

18. Verfahren nach Anspruch 1, wobei das Marineöl aus der Gruppe ausgewählt ist, die Öl des Blauen Wittlings, Loddenöl, Heringsöl, Makrelenöl, Sardellenöl, Menhadenöl, Sardinenöl, Tunfischöl, Stachelmakrelenöl, Öl der Chilenischen Bastardmakrele, Öl der Spanischen Makrele, Sandaalöl, Stintdorschöl und Sprottenöl umfasst.

19. Verfahren nach Anspruch 1, wobei das Verfahren keine Schritte des Neutralisierens, Zwischenlagerns und Desodorierens umfasst.

## Revendications

1. Procédé de réduction de la quantité d'impuretés organochlorine dans une huile marine comprenant les étapes consistant à :
a) mettre en contact l'huile sous pression réduite dans une gamme de températures de 30 à 95 °C avec du charbon actif,
b) séparer le charbon actif de l'huile,
**caractérisé en ce que** le procédé ne comprend pas d'étapes antérieures de neutralisation et d'hivérisation.

2. Procédé selon la revendication 1, **caractérisé en ce que** les impuretés organochlorine sont sélectionnées parmi le groupe constitué de dioxines polychloré, de furanes, de biphényles, et d'hydrocarbures aromatiques polycycliques.

3. Procédé selon la revendication 1, **caractérisé en ce que** la gamme de températures dans l'étape a) est de 30 à 55 °C.

4. Procédé selon la revendication 3, **caractérisé en ce que** la gamme de températures dans l'étape a) est de 30 à 40 °C.

5. Procédé selon la revendication 1, **caractérisé en ce que** la quantité de charbon actif utilisée est dans la gamme d'environ 0,1 à 1,5 % en poids.

6. Procédé selon la revendication 1, **caractérisé en ce que** la quantité de charbon actif utilisée est dans la gamme d'environ 0,2 à 0,75 % en poids.

7. Procédé selon la revendication 5, **caractérisé en ce que** la quantité de charbon actif utilisée est dans la gamme d'environ 0,25 à 0,5 % en poids.

8. Procédé selon l'une quelconque des revendications 1 à 7, **caractérisé en ce que** l'étape a) est réalisée au moins deux fois avec une quantité fraiche de charbon actif ajoutée à chaque fois.

9. Procédé selon la revendication 1, comprenant en outre les étapes de prétraitement consistant à :
a) chauffer l'huile sous pression réduite en présence d'environ 0,5 à environ 2,5 % en poids d'un agent d'adsorption de silice,
b) séparer l'agent d'adsorption de silice de l'huile.

10. Procédé selon la revendication 6, **caractérisé en ce que** l'huile marine présente un niveau de prétraitement de dioxine jusqu'à environ 10 pg TEQ/g et la quantité de charbon actif utilisée est dans la gamme d'environ 0,2 à 0,5 % en poids.

11. Procédé selon la revendication 6, **caractérisé en ce que** l'huile marine présente un niveau de prétraitement de dioxine d'environ 10 à environ 30 pg TEQ/g et la quantité de charbon actif utilisée est dans la gamme d'environ 0,3 à 0,75 % en poids.

12. Procédé selon la revendication 1, **caractérisé en ce que** le temps de l'étape a) est dans la gamme d'environ 15 à environ 150 minutes et la pression est dans la gamme d'environ 1 à environ 70 mbar.

13. Procédé selon la revendication 1, **caractérisé en ce que** le temps de l'étape a) est dans la gamme d'environ 15 à environ 45 minutes et la pression est dans la gamme d'environ 1 à environ 70 mbar.

14. Procédé selon la revendication 1, **caractérisé en ce que** l'huile marine est une huile de foie de poisson.

15. Procédé selon la revendication 14, **caractérisé en ce que** l'huile marine est sélectionnée parmi le groupe constitué d'huile de foie de morue, d'huile de foie de flétan, d'huile de foie de lieu noir, d'huile de foie de requin, d'huile de foie d'anguille.

16. Procédé selon la revendication 15, **caractérisé en ce que** l'huile marine est l'huile de foie de morue.

17. Procédé selon la revendication 1, **caractérisé en ce que** l'huile marine est une huile de chair de poisson.

18. Procédé selon la revendication 1, **caractérisé en ce que** l'huile marine est sélectionnée parmi le groupe constitué d'huile de merlan bleu, d'huile de capelan, d'huile de hareng, d'huile de maquereau, d'huile d'anchois, d'huile de menhaden, d'huile de sardine, d'huile de thon, d'huile de thon rouge, d'huile de liche, d'huile de maquereau espagnol, d'huile d'équille, d'huile de tacaud norvégien et d'huile de sprat.

19. Procédé selon la revendication 1, **caractérisé en ce que** le procédé ne comprend pas les étapes de neutralisation, d'hivérisation et de désodorisation.
